(19) Europäisches Patentamt
European Patent Office
Office européen des brevets

(11) **EP 2 001 238 A2**

(12) **EUROPEAN PATENT APPLICATION**

(43) Date of publication:
**10.12.2008 Bulletin 2008/50**

(51) Int Cl.:
**H04N 7/26** *(2006.01)*    **H04N 7/50** *(2006.01)*

(21) Application number: **08251952.1**

(22) Date of filing: **05.06.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **08.06.2007 JP 2007152242**

(71) Applicant: **Hitachi Ltd.**
**Chiyoda-ku**
**Tokyo 100-8280 (JP)**

(72) Inventors:
• **Murakami, Tomokazu,**
**c/o Hitachi, Ltd., IPG,**
**Tokyo 100-8220 (JP)**
• **Takahasi, Maashi,**
**c/o Hitachi, Ltd., IPG,**
**Tokyo 100-8220 (JP)**

(74) Representative: **Calderbank, Thomas Roger et al**
**MEWBURN ELLIS**
**York House**
**23 Kingsway**
**London WC2B 6HP (GB)**

(54) **Image coding based on the Radon transform**

(57) An image coding and decoding apparatus includes functions, in which an image of every block including either an entire input image or an image divided from the input image is compressed (105), a Radon transform is applied to the compressed image to generate a coefficient (106), the generated coefficient is transformed in a frequency (107), and the frequency transformed coefficient is quantized to generate coding data to generate a coding stream, in the encoding, and an inverse quantization is applied to a coding coefficient included in the coding stream to generate a coefficient (113, 206), an inverse frequency transform is applied to the generated coefficient (114, 207), an inverse Radon transform is applied to the inversed frequency transformed coefficient to generate a decompress image (115, 208), an expand process is applied to the decompression image to decode a residual component (116, 209), and a predicted image is synthesized with the residual component to generate a reconstructed image, in the decoding.

FIG.1

EP 2 001 238 A2

## Description

The present invention relates to an image coding method and image coding apparatus for encoding an image, and an image decoding method and image decoding apparatus for decoding coded image data.

A specification, H.264/AVC (Advanced Video Coding), has been defined as a method of digitizing image and audio information to record and transmit it to another.

In the H.264/AVC system, a pattern having highest image quality for an amount of code can be selected from various predictive coding patterns, in the case of a coding unit for each frame called a macro block. Such a coded pattern is referred to as a coding mode. The foregoing system has been disclosed in "Joint Video Team (JVT) of ISO/IEC MPEG & ITU-T VCEG: Text of International Standard of Joint Video Specification", ITU-T Rec. H.264 I ISO/IEC 14496-10 Advanced Video Coding (December, 2003).

In the case of the coding mode specified by the H.264/AVC system, there are modes to perform a motion compensated prediction, an intra prediction, etc., by dividing images into blocks having a size of powers of 2 squared such as $16 \times 16$, $8 \times 8$ or $4 \times 4$.

In these existing systems, a frequency transform using DCT (Discrete Cosine Transform) and a quantization of coefficients are applied to an original image and residual components of predicted images so that a data compression is performed. Further, there is also a system using a Wavelet transform in place of the DCT.

On the other hand, an oblique direction component of the images cannot be compressed sufficiently dependent on an aspect of the images, since the DCT and Wavelet transform utilize a relativity in a vertical direction. A system referred as a Ridgelet transform using a Radon transform (finite Radon transform) has been studied, as a method of solving the foregoing problem. The foregoing system has been disclosed in "Minh N. Do and Martin Vetterli: The Finite Ridgelet Transform for Image Representation", IEEE Transactions on Image Processing, Vol.12, No.1 (January, 2003).

However, in the case where the Radon transform is used for an image, the size of which is not a prime number, this transform has a property such that the image quality deteriorates when the image is decompressed by an inverse transform.

For this reason, the image quantity of decoded images is insufficient when the Radon transform is used in an image coding system using the blocks having the same size of powers of 2 squared which are not a prime number as an existing coding system has. Therefore, it is difficult to realize reduction for the amount of code by using the Radon transform.

The invention is made in light of the foregoing problem, and an object of the invention is to restrain a deterioration of the image quality in a decoding process, while the amount of code is reduced in a coding process.

These and other features, objects and advantages of the present invention will become more apparent from the following description when taken in conjunction with the accompanying drawings wherein:

Fig. 1 is a constitutional block diagram showing an example of an image coding apparatus in a first embodiment of the invention;

Fig. 2 is a constitutional block diagram showing an image decoding apparatus in a third embodiment of the invention;

Figs. 3A to 3E are explanatory diagrams in relation to a size reduction in the first embodiment of the invention;

Figs. 4A to 4C are explanatory diagrams in relation to the Radon transform in the first embodiment of the invention;

Fig. 5 is a flow chart showing a process of an image coding method in the first embodiment of the invention;

Fig. 6 is a flow chart showing a process of the image decoding method in the third embodiment of the invention;

Fig. 7 is an explanatory diagram showing a data recording medium in a second embodiment of the invention; and

Fig. 8 is an explanatory diagram showing coding modes in the first and third embodiments of the invention.

While we have shown and described several embodiments in accordance with our invention, it should be understood that disclosed embodiments are susceptible of changes and modifications without departing from the scope of the invention. Therefore, we do not intend to be bound by the details shown and described herein but intend to cover all such changes and modifications a fall within the ambit of the appended claims, as interpreted by the description and drawings.

Hereinafter, embodiments of the present invention will be described with reference to the drawings.

Construction elements having respectively the same reference numerals have the same function in the drawings.

A "Radon transform mode" indicated in the description and the drawings designates a new coding mode in relation to the invention.

A "residual component" indicated in the description and drawings also includes a meaning of a "prediction residue."

An "area" indicated in the description and drawings includes a meaning of an "image."

A "transmission together with a flag" indicated in the description and drawings includes a meaning of a "transmission included in a flag."

(First Embodiment)

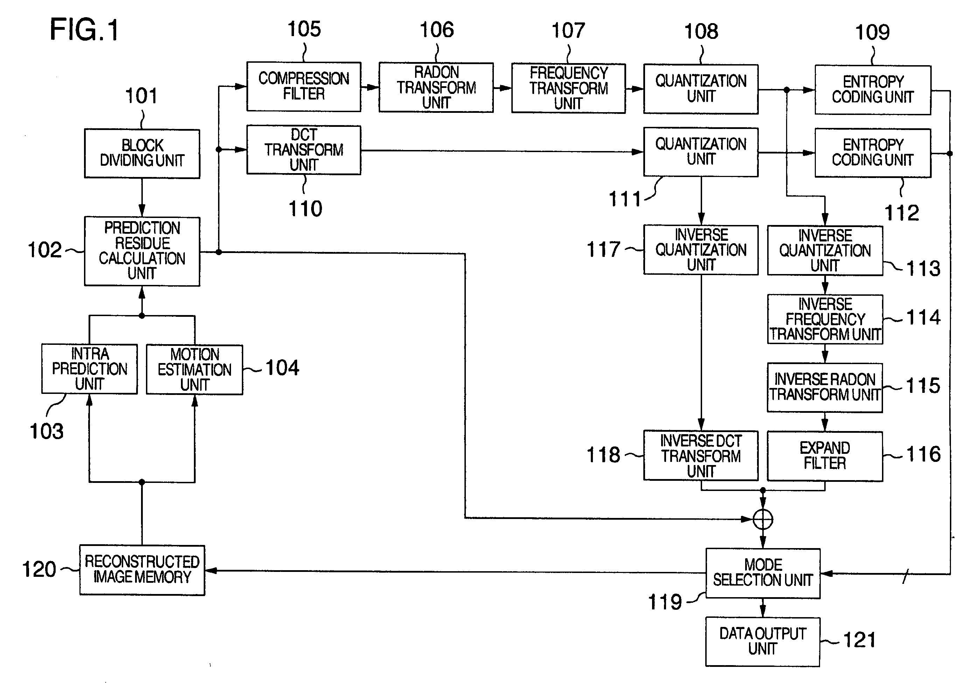

A first embodiment in the invention will be described with reference to the drawings. Fig. 1 is a block diagram showing an example of an image coding apparatus in relation to the first embodiment.

The image coding apparatus is constituted by a block dividing unit 101, a prediction residue calculation unit 102, an intra prediction unit 103, a motion estimation unit 104, a size reduction 105, a Radon transform unit 106, a frequency transform unit 107, a quantization unit 108, an entropy coding unit 109, a DCT transform unit 110, a quantization unit 111, an entropy coding unit 112, an inverse quantization unit 113, an inverse frequency transform unit 114, an inverse Radon transform unit 115, an expand filter 116, an inverse quantization unit 117, an inverse DCT transform unit 118, a mode selection unit 119, a reconstructed image memory 120, and a data output unit 121.

An operation of the respective construction elements in the image coding apparatus will be described below in detail.

In addition, the operation of the image coding apparatus may be a self-directive operation of the respective construction elements as described below, and may also be realized to cooperate with software stored in a control unit and memory unit, for example.

First, the block dividing unit 101 receives an original image as a coding target to divide the image into blocks as a coding unit. Here, the divided block is used of a size of powers 2 squared such as 16 x 16 pixels, referred to as a macro block. The entire image may be processed as a block.

In the case of the image coding apparatus of the invention, it is possible to coexist the Radon transform which requires the block of a prime number size with a coding system using the related DCT which utilizes the block having a size of powers of 2 squared.

The following description will be concerned with a case where the block size is 8 x 8 pixels. Further, a size of macro block is set to 16 x 16 pixels, and a macro block has four blocks each having the 8 x 8 pixels.

The prediction residue calculation unit 102 takes a difference between a generated predicted image and the original image to calculate a residual component and output it from itself. A predictive method has two types: an intra prediction (within frame); and an inter prediction (between frames) in general. These predictions are performed by the intra prediction unit 103 and the motion estimation unit 104, respectively. The intra prediction uses information of an identically coded frame which is previously coded earlier than a coding targeted block. The inter prediction uses information of either a frame, at a front or back as a reproduction time, which is previously coded earlier than the coding targeted block. The pieces of information are stored in the reconstructed image memory 120. The methods for intra prediction and motion estimation may be used with the related method disclosed in Joint Video Team (JVT) of ISO/IEC MPEG & ITU-T VCEG: "Text of International Standard of Joint Video Specification", ITU-T Rec. H.264 I ISO/IEC 14496-10 Advanced Video Coding (December, 2003). Further, the prediction would be failed dependent on the block. In this case, the original image itself is handled as a residual component.

Here, the description indicates a single piece for each of the intra prediction unit 103, motion estimation unit 104 and reconstructed image memory 120, however, they may be provided for each of the coding modes and frames.

Next, a processing is branched to each of the coding modes.

For the coding mode which is the same as the existing coding system, the DCT transform unit 110 applies the DCT transform to the residual component inputted from the prediction residue calculation unit 102 to be transformed to a coefficient. Subsequently, the coefficient is transferred to the quantization unit 111 to quantize the transformed coefficients. The quantized coefficient is transferred to the entropy coding unit 112 to perform an information compression with use of a variable length code etc. in accordance with a predetermined order and transfer the compression data to the mode selection unit 119. At the same time, the quantized coefficient is also transferred to the inverse quantization unit 117 to be returned to a transformed coefficient by an inverse quantization, and also decompressed to the residual component by the inverse DCT transform unit 118. The residual component is added with information from the prediction residue calculation unit 102 to be returned to a reconstructed image and stored in the reconstructed image memory 120. The reconstructed image enters into the mode selection unit 119 to be utilized for a mode selection. These processes are the same process as disclosed in Joint Video Team (JVT) of ISO/IEC MPEG & ITU-T VCEG: "Text of International Standard of Joint Video Specification", ITU-T Rec. H.264 | I ISO/IEC 14496-10 Advanced Video Coding (December, 2003).

Next, the following description will be concerned with a Radon transform mode as a new coding mode to be utilized for the embodiment. In the case of this coding mode, the residual component is inputted to the size reduction 105 from the prediction residue calculation unit 102 to perform a compression transform for the image. In the compression transform, the block having 8 x 8 pixels is separated into a block having compressed $7 \times 7$ pixels and a coefficient to be generated in this compression transform. In the case of the block having the size of 8 x 8 pixels, the block having the size of 7 x 7 pixels and 15 pieces of the coefficients are outputted. The size reduction 105 is not only used for a single pattern, but an appropriate filter may be selected suitable for a block aspect. Further, the filter may also be used by plural times. For example, the process is performed by three times for the block having the size of $16 \times 16$ pixels, so that a block having a size of $13 \times 13$ pixels can be outputted. The size reduction 105 will be described in detail later.

The Radon transform unit 106 then performs a Radon transform. Here, the Radon transform is applied to a size reduced area (reduced image), as a target, generated by the foregoing compression transform. In the case of the block having the size of 8 x 8 pixels, the part of 7 x 7 pixels size is a target. The Radon transform may be used with the related method disclosed in Minh N. Do and Martin Vetterli: "The Finite Ridgelet Transform for Image Representation", IEEE Transactions on Image Processing, Vol.12, No.1 (January, 2003). The Radon transform requires a block size which should have a prime number, but the Radon transform is simply applicable since the block having the size of 8 x 8 pixels is transformed to the size of 7 x 7 pixels. Detail of the above will be described later.

The frequency transform unit 107 then transforms the Radon transformed coefficient into a frequency. Here, the frequency transform may be performed by using the DCT transform or the Wavelet transform. A process for taking differences of adjacent components may be applied to a plurality of components of sum in the same direction of the Radon transform, in place of the frequency transform. Detail of the above will be described later.

In addition, at this time, the frequency transfer unit 107 does not apply the frequency transform to the coefficient part generated by the foregoing size reduction 105.

Next, the quantization unit 108 quantizes the frequency transformed coefficient. The quantization is a process that minimizes the value of coefficient divided by a value and reduces amount of information. In the foregoing cases of the part of coefficient other than the size reduced area generated by the size reduction 105 and the part of coefficient performed by the Radon transform in the size reduced area, thereafter, performed by the frequency transfer, a value of the quantization is given to each of the parts separately so that the precision of image quality of the coding can be enhanced. Further, a quantized value is separately given to the vertical component, horizontal component, and other oblique direction component, even for the Radon transformed and frequency transformed coefficient in the size reduced area. In this way, the precision can be enhanced in the vertical and horizontal directions which are conspicuous for the human eyes, and the precision for the other components can be lowered. Therefore, a system for reproducing a high image quality can be realized for the same amount of code.

The entropy coding unit 109 then encodes the quantized coefficient by using a variable length code etc. In this case, a general system may be used for the entropy coding. An output code is transferred to the mode selection unit 119 to perform a mode selection.

At the same time, the quantized coefficient is transferred to the inverse quantization unit 113 to decompress to the previous coefficient prior to the quantization. This process may be performed by an inverse operation against that of the quantization unit 108.

Next, the inverse frequency transform unit 114 applies an inverse frequency transform to the coefficient to be decompressed to the previous coefficient prior to the frequency transform. This process may perform an inverse operation against that of the frequency transform unit 107.

The inverse Radon transform unit 115 then performs an inverse Radon transform. This process is an inverse operation against that of the Radon transform unit 106. Detail of the above will be described later.

The expand filter 116 uses the size reduced area (decompressed image) decompressed by the inverse Radon transform and the coefficient for the decompression to thereby decompress a residual component of the block by an expand process. For example, for the block having the size of 8 x 8 pixels, the block having the size of 8 x 8 pixels is decompressed by using the compressed area of the 7 x 7 pixels size and 15 pieces of coefficients. This process is an inverse operation against that of the size reduction 105.

Next, the residual component is added with information from the prediction residue calculation unit 102 to be returned to a reconstructed image and stored in the reconstructed image memory 120. The reconstructed image is inputted to the mode selection unit 119 to be used for a mode selection.

The foregoing description is concerned with the process in the Radon transform mode utilized for the embodiment.

The mode selection unit 119 selects a highest coding efficiency mode for the block and macro block on the basis of information relative to the plural coding modes. For the respective coding modes, an amount of code to be generated, when an error (coding error) between the original image and decoded image and its coding mode are used, is calculated to select an appropriate coding mode from a relation between the error and the amount of code. For example, the existing system such as a Rate-Distortion optimum system may be used as a system for selecting a highest efficiency coding mode. This system is disclosed in Gary Sullivan and Thomas Wiegand: "Rate-Distortion Optimization for Video Compression", IEEE Signal Processing Magazine, vol. 15, No. 6, pp.74-90 (November, 1998).

Finally, the data output unit 121 outputs a selected code to generate a coding stream and perform an image coding.

At this time, the coding stream generated by the Radon transform mode in the embodiment is outputted as a type of the coding mode, such as the Radon transform modes to perform the intra prediction and the motion estimation. Alternatively, a Radon transform flag is provided independently for all of the existing coding modes. The flag may then be added to the existing coding modes as an aspect of the frequency transform in the respective coding modes, such as a mode using the DCT transform and a mode using the Radon transform.

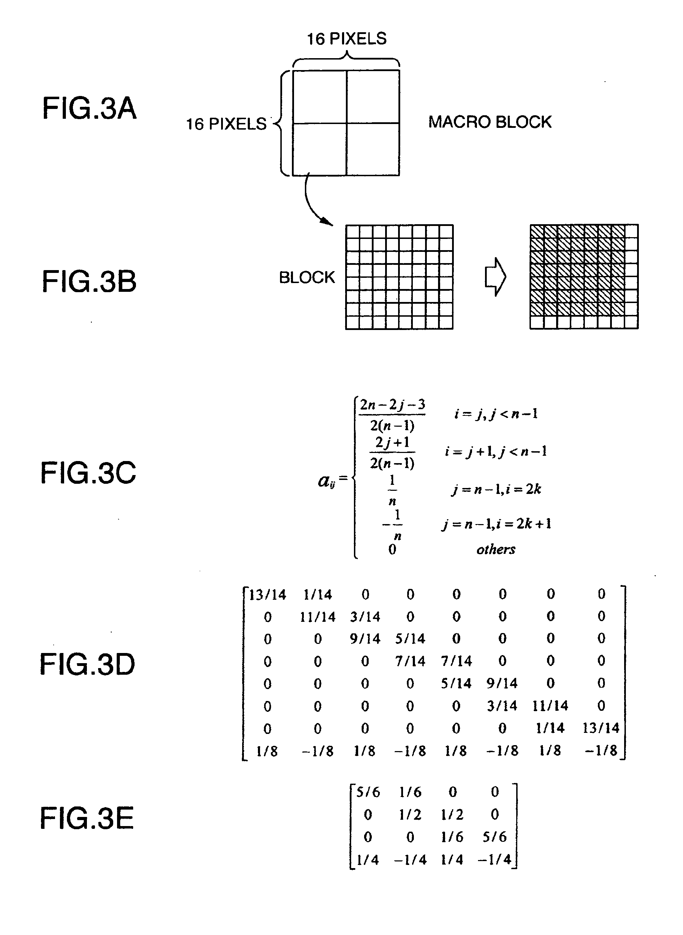

A size reduction process in the Radon transform mode will be described with reference to Figs. 3A to 3E.

Here, the following description will be concerned with an example indicating that a macro block (Fig. 3A) having 16 x 16 pixels is divided into blocks (Fig. 3B) each having 8 x 8 pixels to perform the compression process for the respective blocks. Generally, it is desirable that a block size is set to powers of 2 squared and an area size after the compression is set to a prime number less than one compared with the area size. For example, assuming that a combination of the block size and the area size after the compression is 4 and 3, 8 and 7, 32 and 31, both the coding system using the block size of powers of 2 squared and Radon transform can be used appropriately. The following description will be concerned with use of a combination of 8 and 7, as an example.

The compression transform can be performed by using a matrix indicated on an expression (1) and Fig. 3C. $\alpha_{ij}$ in the expression (1) indicates an element in a position of (i, j) of the matrix. Here, n is a size of block. A most left-upper position in the matrix is (i, j) = (0, 0). For example, when n = 8, the matrix is shown as Fig. 3D, and when n = 4, the matrix is shown as Fig. 3E. In the case of the matrix, the bottommost row is a row to output a coefficient for the decompression, and this row may be defined appropriately so that the matrix $a_{ij}$ obtains an inverse matrix. If a difference between the adjacent pixels in the block is not too large, the coefficient for the decompression can be made small by a definition as indicated on the expression (1). The value in the matrix may also be changed over in accordance with the aspect of targeted block.

$$a_{ij} = \begin{cases} \dfrac{2n-2j-3}{2(n-1)} & i = j, j < n-1 \\ \dfrac{2j+1}{2(n-1)} & i = j+1, j < n-1 \\ \dfrac{1}{n} & j = n-1, i = 2k \\ -\dfrac{1}{n} & j = n-1, i = 2k+1 \\ 0 & others \end{cases} \tag{1}$$

This matrix is multiplied from the left side of the block having 8 x 8 pixels to perform the compression in the vertical direction, so that the bottommost row of an outputted matrix becomes a coefficient set for the decompression. Next, a transposed matrix of the outputted matrix is generated, and the matrix indicated by the expression (1) is again multiplied from the left side of the matrix, the rightmost column of which is excluded, or the matrix having (n - 1) columns x n rows to apply the compression in the horizontal direction to the previous block. Here, the bottommost row becomes the coefficient set for the decompression even in the outputted matrix. Further, the matrix having an n x n size, including the previously excluded rightmost column, is again transposed to make the rightmost column and bottommost row to become the coefficient for the decompression, and a remaining block having the size of (n - 1) x (n - 1) becomes a compressed area. For example, in the case of the block having the size of 8 x 8 pixels, a block having the size of 7 x 7 pixels and 15 pieces of coefficients are outputted. In this way, the compression transform is performed. The size reduction 105 may be replaced with other types, therefore, it is acceptable to use any filters if the filter can perform an inverse transform. Further the filter may be changed appropriately in response to the inputted block.

In addition, by substituting a powers of 2 value to the value of n where n - 1 is a prime number, the above method can be used for a size of block other than the foregoing block size.

According to the foregoing size reduction 105, it is possible to transform an image having the block size of powers of 2 squared into an image having the block size of a prime number.

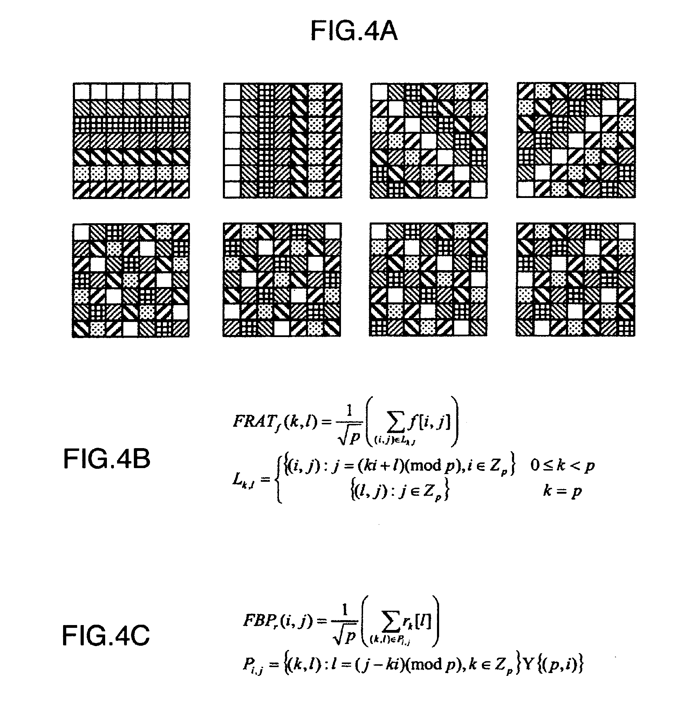

Next, the Radon transform in the Radon transform mode will be described with reference to Figs. 4A to 4C.

The Radon transform is applied to the size reduced area generated by the size reduction 105 in the invention, and is also performed by using a method as described below. That is, the transform takes a sum of a plurality of pixels indicating the same patterns in Fig. 4A. For example, in the case of the 7 x 7 size, the sum is calculated in eight directions. There are seven lines in one direction, and eight values are obtained as a sum. However, the total (a sum of all of the pixels in the block) of seven lines is the same for each of the eight directions, therefore, data for the seven lines can be obtained if an entire sum is known for one, or a sum of the six lines is known in the case of each direction. That is, if an image size is an n × n size after processing by the size reduction 105, data of (n - 1) in (n + 1) directions and an entire sum are required, or (n + 1) (n - 1) + 1 = n × n, therefore, the number of coefficients is the same as the original block size, which does not become redundancy.

The Radon transform is indicated by an expression (2) and Fig. 4B.

$$FRAT_f(k,l) = \frac{1}{\sqrt{p}} \left( \sum_{(i,j) \in L_{k,l}} f[i,j] \right)$$

$$L_{k,l} = \begin{cases} \{(i,j) : j = (ki + l)(\mathrm{mod}\ p), i \in Z_p\} & 0 \le k < p \\ \{(l,j) : j \in Z_p\} & k = p \end{cases} \quad (2)$$

In the expression (2), (i, j) indicates a position in the block, and p indicates a block size. Further, k indicates an oblique line direction, and 1 indicates a line number and position. $z_p$ is a set indicating positions from 0 to p. In the case of the expression (2), a sum is divided by a square root of p for normalization.

On the other hand, for the inverse Radon transform, a line which passes certain pixels is one alone in a single direction, and the line passes all of the pixels once, except specific pixels in the block at a sight of the lines in all of the directions, as shown in Fig. 4A. That is, a value V of the specific pixels is indicated by an expression (3), where a summation of all of the lines which pass the specific pixels is SumL, a summation of block pixels is SumB, and a block size is n.

$$V = \frac{SumL - SumB}{n} \quad (3)$$

An expression (4) and Fig. 4C are given if the expression (3) is indicated correspondingly by the expression (2).

$$FBP_r(i,j) = \frac{1}{\sqrt{p}} \left( \sum_{(k,l) \in P_{i,j}} r_k[l] \right)$$

$$P_{i,j} = \{(k,l) : l = (j - ki)(\mathrm{mod}\ p), k \in Z_p\} Y\{(p,i)\} \quad (4)$$

In the expression (4), (i, j) indicates a position in the block, and p indicates a block size. k indicates an oblique line direction, and 1 indicates a line number and position. $Z_p$ is a set indicating positions from 0 to p. In the case of the expression (4), a sum is divided by a square root of p for normalization.

The foregoing Radon transform and inverse Radon transform are required that the block size should be a prime number. However, in the case of embodiment, they can be used since block used be the size of 8 x 8 pixels in the division is transformed into the size of 7 × 7 pixels by the size reduction 105.

The frequency transform process in the Radon transform mode will be described below.

The frequency transform is applied to the Radon transformed coefficient, however, this process may be performed by using either the existing DCT transform or Wavelet transform. A sum of the respective lines in the foregoing certain direction has a correlation between the lines, therefore, a relative redundancy can be reduced by using the DCT transform or Wavelet transform. The frequency transform may be applied not only to the coefficient transformed by the Radon transform but also to the coefficient generated by the compression process.

In place of the frequency transform, a process for taking a difference between the adjacent components may be applied to the sum of the lines in the same direction of the Radon transform. For example, a transform matrix T indicated by an expression (5) is multiplied to the left side of seven coefficients so that a first outputted coefficient becomes a total of lines, that is, a summation of the block pixels. This means that a single transmission is performed in the block. Further, the coefficient can be made small since the difference is taken from the adjacent components for the remaining coefficients. The inverse transform in this system is performed by multiplying an inverse matrix of the transform matrix T in the expression (5).

$$T = \begin{bmatrix} 1 & 1 & 1 & 1 & 1 & 1 & 1 \\ -1 & 1 & 0 & 0 & 0 & 0 & 0 \\ 0 & -1 & 1 & 0 & 0 & 0 & 0 \\ 0 & 0 & -1 & 1 & 0 & 0 & 0 \\ 0 & 0 & 0 & -1 & 1 & 0 & 0 \\ 0 & 0 & 0 & 0 & -1 & 1 & 0 \\ 0 & 0 & 0 & 0 & 0 & -1 & 1 \end{bmatrix} \qquad (5)$$

Next, a quantization process in the Radon transform mode will be described below. The quantization is applied to the coefficient outputted in the compression transform and the coefficient outputted after the Radon transform and frequency transform. These coefficients can be adjusted to the precision of image quality of the coding by giving separately a quantization value to the respective coefficients. Further, for the coefficient outputted after the Radon transform and frequency transform, a quantized value is given separately to the vertical component, horizontal component, and other oblique direction component. In this way, the precision can be enhanced in the vertical and horizontal directions which are conspicuous by human eyes, and the precision for the other components can be lowered. Therefore, a system for reproducing a high image quality can be realized for the same amount of code. The quantization values may be changed for each of the blocks.

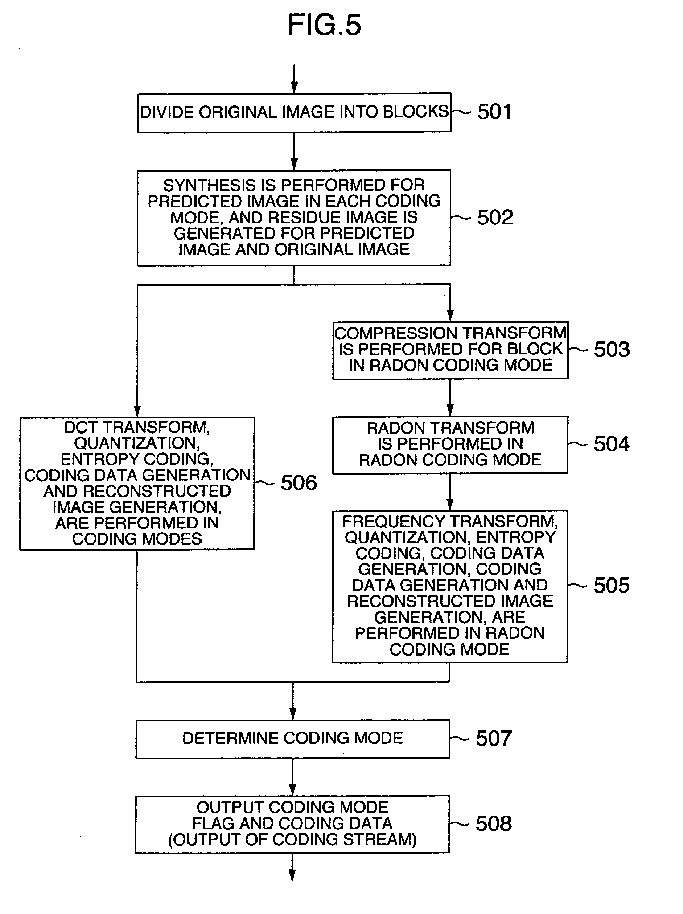

A processing flow of coding method in the image coding apparatus will be described with reference to Fig. 5 in the first embodiment of the invention.

First, an original image as a coding target is received and divided into blocks in a step 501. An entire screen may be handled with as a single block without dividing into the blocks. In a step 502, a synthesis for a predicted image in each of the coding modes is applied to the blocks of the original image obtained by the step 501 to calculate a residual component of the predicted image and original image. For example, in the process of the step 502, the intra prediction unit 103, motion estimation unit 104 etc. may perform the respective coding modes. Here, the process is branched to every coding mode. The coding mode using the existing DCT transform is moved to a step 506, and the Radon transform mode to be used in the invention is moved to a step 503.

For the existing coding mode, the DCT transform and quantization processes are applied to the residual component to calculate coding data in the step 506. For example, the process of the step 506 may be performed by the DCT transform unit 110 and quantization unit 111 in the image coding apparatus. Further, an entropy coding process, an inverse quantization and an inverse DCT transform are applied to the coding data to generate a reconstructed image, in the step 506. The foregoing process may be performed by the entropy coding unit 112, inverse quantization unit 117, and inverse DCT transform unit 118, for example. In any cases, the coding data and reconstructed image are outputted in the step 506.

For the Radon coding mode, the compression transform of the blocks is performed in the step 503, in which the compression transform has been described previously. For example, the process of the step 503 may be performed by the size reduction 105 in the image coding apparatus. In a step 504, the Radon transform is applied to the compressed block, and this transform has been described above. The process of the step 504 may be performed by the Radon transform unit 106 in the image coding apparatus. In a step 505, the frequency transform and quantization processes are applied to the coefficient after the Radon transform to calculate a coding coefficient. For example, the process of the step 505 may be performed by the frequency transform unit 107 and quantization unit 108 in the image coding apparatus. Further, the entropy coding process and inverse quantization are applied to the coding coefficient to generate coding data and generate a reconstructed image by the inverse frequency transform, inverse Radon transform and expand filter in the step 505. The foregoing processes may be performed by the entropy coding unit 109, inverse quantization unit 113, inverse frequency transform unit 114, inverse Radon transform unit 115, and expand filter 116. In any cases, the coding data and reconstructed image are outputted in the step 505.

Next, in a step 507, image coding results of the respective coding modes are compared in the processes of the steps 506 and 505 to determine a coding mode for an output relative to the block. For example, the process of the step 507 may be performed by the mode selection unit 119 in the image coding apparatus. Coding data in the coding mode selected by the step 507 is then outputted as a coding stream in a step 508.

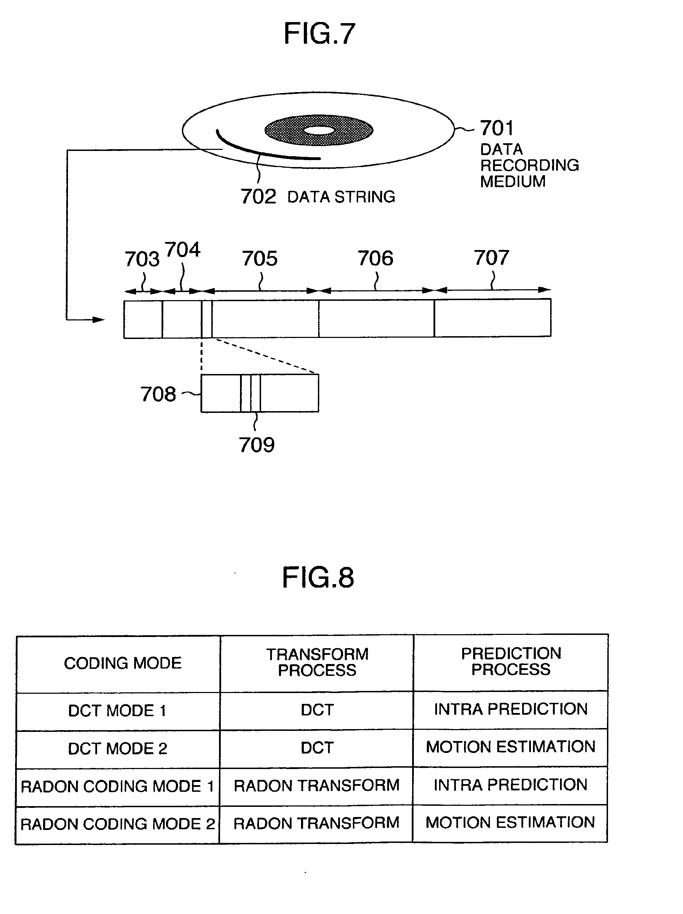

In addition, Fig. 8 shows an example of the coding modes in the image coding apparatus and image coding method in the embodiment.

That is, the image coding apparatus in Fig. 1 encodes the predicted image generated by the intra prediction unit 103 and the residual component of the input image by the processes of the DCT transform unit 110, quantization unit 111 and entropy coding unit 112, in the case of a DCT mode 1 as a related intra prediction mode shown in Fig. 8.

In the case of a DCT mode 2 as a related motion estimation mode 2 shown in Fig. 8, the predicted image generated by the motion estimation unit 104 and the residual component of the input image are encoded by the processes of the DCT transform unit 110, quantization unit 111 and entropy coding unit 112.

Next, in the case of a Radon coding mode 1 as a new coding mode in the embodiment shown in Fig. 8, the predicted image generated by the intra prediction unit 103 and the residual component of the input image are encoded by the processes of the size reduction 105, Radon transform unit 106, frequency transform unit 107, quantization unit 108, and entropy coding unit 109.

In the case of a Radon coding mode 2 as a new coding mode in the embodiment shown in Fig. 8, the predicted image generated by the motion estimation unit 104 and the residual component of the input image are encoded by the processes of the size reduction 105, Radon transform unit 106, frequency transform unit 107, quantization 108, and entropy coding unit 109.

Referring back to Fig. 5 indicating the image coding method, in the case of the DCT mode 1 as the related intra prediction mode shown in Fig. 8, the predicted image generated by the intra prediction and the residual component of the input image are generated in the step 502, and encoded by the DCT transform, quantization, and entropy coding, in the step 506.

In the case of the DCT mode 2 as the related motion estimation mode shown in Fig. 8, the predicted image generated by the motion estimation and the residual component of the input image are generated in the step 502, and encoded by the DCT transform, quantization, and entropy coding, in the step 506.

Next, in the case of the Radon coding mode 1 as the new coding mode in the embodiment shown in Fig. 8, the predicted image generated by the intra prediction and the residual component are generated in the step 502, and encoded by using the Radon transform in the steps 503, 504, and 505.

In the foregoing examples of the coding modes in Fig. 8, the description has not been concerned with a definition for a type of data such as a block size. However, the respective coding modes may be broken into parts and defined by setting the block size used in the coding modes, the size of compression image used in the Radon coding mode, etc. to as parameters.

As described above, the coding process is performed in the embodiment of the invention.

According to the image coding apparatus and image coding method in the foregoing first embodiment, it is possible to use the Radon transform in the coding process using the existing coding system and common block size, therefore, it is also possible to realize the image coding apparatus and image coding method having a higher compression efficiency than the existing system.

Further, according to the image coding apparatus and image coding method in the first embodiment, the Radon transform mode is used so that information not only for the vertical and horizontal directions but also the oblique direction can be compressed effectively. Therefore, it is possible to realize the image coding apparatus and image coding method, which is suitable for the human visual property and has a less image deterioration by appropriately controlling the compression precision for the information.

Thus, the image coding apparatus and image coding method in the first embodiment employ the foregoing coding mode, so that the predicted image having both the high compression efficiency and high precision can be generated.

Further, the image coding apparatus and image coding method in the first embodiment are applicable to a recording apparatus, cellular telephone, digital camera, etc.

According to the image coding apparatus and image coding method in the foregoing first embodiment of the invention, it is possible to reduce an amount of code in the coding data and prevent the reconstructed image from deteriorating the image quantity when the coding data is decoded, that is, realize a high compression ratio and good image quality.

(Second Embodiment)

Fig. 7 shows an example of a data recording medium in a second embodiment of the invention.

A coding stream in the embodiment of the invention is a coding stream generated by the image coding apparatus or image coding method in the first embodiment. The generation method of the cording stream has already been described in the first embodiment, therefore, its description will be omitted.

Here, the coding stream in the embodiment is recorded on a data recording medium 701 as a data string 702. The data string 702 is recorded thereon as a coding stream in accordance with a predetermined grammar. The following description will be concerned with a partly modified specification of H.264/AVC spec.

First, in the case of H.264/AVC specification, the coding stream is constituted by a sequence parameter set 703, a picture parameter set 704, slices 705, 706 and 707. The following description will be concerned with an example in which a single image (picture) is stored in one slice.

For example, the respective slices 705, 706 and 707 contain information 708 relative to their own macro block. The information 708 relative to the macro block has an area for recording the coding mode for each of the macro blocks, which is defined as a coding mode flag 709.

Next, the Radon transform mode relative to the embodiment is recorded on the coding mode flag 709, as a type of the coding mode such as the Radon transform mode to perform the intra prediction and the motion estimation. Alternatively, a Radon transform flag may be provided independently for all of the existing code modes, and set to as an aspect of the frequency transform in the respective coding modes, such as a mode using the DCT transform, a mode using the Radon transform, etc.

According to the data recording medium in the foregoing second embodiment, the coding stream coded by the Radon transform can be recorded while the existing coding system and common block size are used. Therefore, it is possible to record the image by the higher compression efficiency than the existing system, even though the coding stream is of using the existing coding system and common block size.

Further, the coding stream coded by the Radon transform, which enables to effectively compress the information not only in the vertical and horizontal directions but also in the oblique direction, is recorded while the coding stream indicates that the Radon transform is used. In this way, the data recording medium can be realized so that a reconstructed image suitable for the human visual characteristic and having less image deterioration on the decoding can be generated while the compression efficiency is made higher than the existing system on the recording.

According to the data recording medium in the foregoing second embodiment of the invention, the amount of code can be reduced, and the image quality can be prevented from deterioration. That is, it is possible to realize the data recording medium having the high compression ratio and for recording the coding stream having the good image quality.

(Third Embodiment)

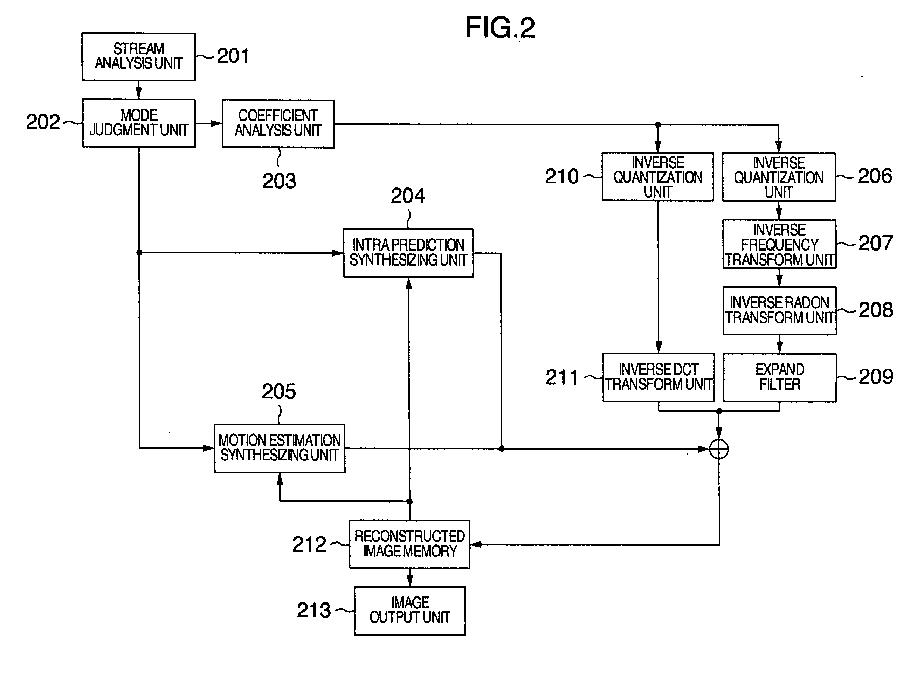

Fig. 2 shows a block diagram of an image decoding apparatus in a third embodiment of the invention.

The image decoding apparatus is constituted by a stream analysis unit 201, a mode judgment unit 202, a coefficient analysis unit 203, an intra prediction synthesizing unit 204, a motion estimation synthesizing unit 205, an inverse quantization unit 206, an inverse frequency transform unit 207, an inverse Radon transform unit 208, an expand filter 209, an inverse quantization unit 210, an inverse DCT transform unit 211, a reconstructed image memory 212, and an image output unit 213.

An operation of constitutional elements in the image decoding apparatus will be described below.

In addition, the operation of the respective construction elements in the image decoding apparatus may be a self-directive operation as described below, and may also be realized to cooperate with software stored in a control unit and memory unit, for example.

First, the stream analysis unit 201 analyzes an inputted coding stream. Here, the stream analysis unit 201 also performs a data extraction process to be extracted data from packets and an acquiring process to be acquired information from various types of headers and flags. A process is performed for the respective macro blocks.

At this time, the coding stream inputted into the stream analysis unit 201 is a coding stream generated by the image coding apparatus and image coding method in the first embodiment. The generation method of the coding stream is omitted in this embodiment since it has already been described in the first embodiment. The coding stream in this embodiment may be a coding stream read out from the data recording medium in the second embodiment. A recording method of that is omitted in this embodiment since it has already been described in the second embodiment.

Next, the mode judgment unit 202 judges a coding mode designated by the flag etc. for the respective macro blocks. A decoding process as hereinafter described performs a process corresponding to the coding mode of a judged result. The process for each of the coding modes will be described below.

First, the intra prediction synthesizing unit 204 synthesizes the intra prediction with the prediction image when the coding mode is an intra coding. The foregoing method may be a related method. Here, the intra prediction synthesizing unit 204 outputs a synthesized prediction image.

The motion estimation synthesizing unit 205 synthesizes the motion estimation with the prediction image when the coding mode is a coding operated by the prediction between frames. At this time, there are cases of using a motion vector included in the coding stream which inputs to the image decoding apparatus, and of using information of the adjacent macro blocks such as a skip mode and a direct mode and information of the macro blocks relative to the adjacent frames. The foregoing process may also be used with a related existing method. Here, the motion estimation synthesizing unit 205 outputs a synthesized prediction image.

The coefficient analysis unit 203 analyses the coding data of the respective macro blocks contained in the inputted coding stream to output the coding data contained in the residual component. At this time, a process is applied to the coding mode as a result judged by the mode judgment unit 202.

In the case where the coding mode encodes by a transform system using the relate DCT transform, the coding data is transferred to the inverse quantization unit 210 which applies the inverse quantization process to the coding data to be transferred to the inverse DCT transform unit 211. The inverse DCT transform unit 211 applies the inverse DCT transform to the inversely quantized coefficient to decompress the residual component. These processes are the same as those performed by the inverse quantization unit 117 and inverse DCT transform unit 118 shown in Fig. 1.

In the case where the coding mode is the Radon transform mode used in the invention, the coding data is transferred to the inverse quantization unit 206 which applies the inverse quantization process to the coding data to be transferred to the inverse frequency transform unit 207. The inverse frequency transform unit 207 applies the inverse frequency transform to the inversely quantized coefficient to be transferred to the inverse Radon transform unit 208. The inverse Radon transform unit 208 applies the inverse Radon transform to the coefficient to output pixels of the size reduced area. Next, the expand filter 209 decompresses the residual component in the block by an expand process, with use of the size reduced area decompressed by the inverse Radon transform and the coefficient for the decompression. For example, in the case of a block having the size of 8 x 8, the block having the size of 8 x 8 is decompressed by using the compressed area having the size of 7 x 7 and 15 pieces of coefficients. These processes are the same as those performed by the inverse quantization unit 113, inverse frequency transform unit 114, inverse Radon transform unit 115, and expand filter 116, as shown in Fig. 1.

As described above, the residual component of the respective decompressed coding modes is added with the predicted image outputted from the intra prediction synthesizing unit 204 and motion estimation synthesizing unit 205 to be returned to a reconstructed image and stored in the reconstructed image memory 212. The reconstructed image memory 212 stores information of presently decoded frames and information of previously decoded frames. These pieces of information are used for reference by the intra prediction synthesizing unit 204 and motion estimation synthesizing unit 205.

Finally, the decoded image is outputted by the image output unit 213, so that the image is decoded.

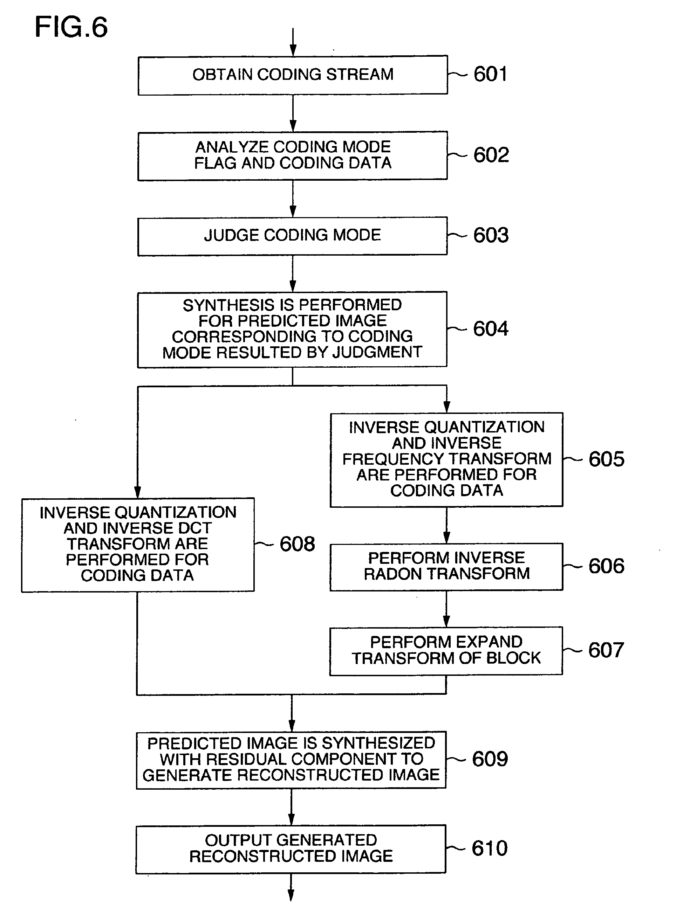

Next, Fig. 6 is a flow chart showing the image decoding method performed by the image decoding apparatus in the third embodiment of the invention. The following description will be concerned with a process performed by the method.

First, a coding stream is obtained as a decoding target in a step 601. For example, the process of the step 601 may be performed by the stream analysis unit 201 in the image decoding apparatus. Next, the coding mode flag and coding data contained in the coding stream obtained by the step 601 are analyzed in a step 602. For example, the process of the step 602 may also be performed by the stream analysis unit 201. In a step 603, the coding mode is judged for every coding unit (every block, every pixel unit, etc.) contained in the coding data, by using the coding mode flag analyzed in the step 602. For example, the process of the step 603 may be performed by the mode judgment unit 202 in the image decoding apparatus. A synthesis of the predicted image corresponding to the coding mode judged by the step 603 is then performed in a step 604. The process of the step 604 is explained in detail, for example, the intra prediction synthesizing unit 204 and motion estimation synthesizing unit 205 in the image decoding apparatus in Fig. 2 may perform the synthesizing process of the prediction image in the cases of the respective coding modes in response to the judged coding mode. The process is branched to every coding mode. The process of the coding mode using the existing DCT transform is moved to a step 608, and the process of the Radon transform mode used in the invention is moved to a step 605.

For the existing coding mode, the coding data is analyzed in a step 608, the inverse quantization and inverse DCT transform processes are applied to the coding data, and the residual component is decoded for the foregoing single coding unit. For example, the process of the step 608 may be performed by the coefficient analysis unit 203, inverse quantization unit 210 and inverse DCT transform unit 211 in the image decoding apparatus.

For the Radon transform mode, the coding data is analyzed in the step 605, the inverse quantization and inverse frequency transform processes are applied to the coding data, and the coefficient after the Radon transform is decompressed for the foregoing single coding unit. These processes have been described above. In a step 606, the compressed block is decompressed by the inverse Radon transform. The process of inverse Radon transform has been described above. In a step 607, the residual component is decompressed by performing the expand transform of the block. The process of expand transform has been described above. These processes may be performed by the coefficient analysis unit 203, inverse quantization unit 206, inverse frequency transform unit 207, inverse Radon transform unit 208 and expand filter 209.

Next, in a step 609, the predicted image is synthesized with the decoded residual component to generate a decoded image which is outputted in a step 610. The process of the step 610 may be performed by the reconstructed image memory 212 and image output unit 213 in the image decoding apparatus.

In addition, the image decoding apparatus in Fig. 2 synthesizes the residual component decoded by the inverse quantization unit 210 and inverse DCT transform unit 211 with the predicted image generated by the intra prediction synthesizing unit 204 to thereby generate the decoded image, in the case where the coding stream as a decoding target corresponds to the DCT mode 1 as the related intra prediction mode shown in Fig. 8.

Further, in the case where the coding stream as the decoding target corresponds to the DCT mode 2 as the related motion estimation mode shown in Fig. 8, the residual component decoded by the inverse quantization unit 210 and inverse DCT transform unit 211 is synthesized with the predicted image generated by the motion estimation synthesizing unit 205 to thereby generate the decoded image.

In the case where the coding stream as a decoding target corresponds to the Radon coding mode 1 as the new coding mode in the embodiment shown in Fig. 8, the residual component decoded by the inverse quantization unit 206, inverse frequency transform unit 207, inverse Radon transform unit 208, and expand filter 209 is synthesized with the predicted image generated by the intra prediction synthesizing unit 204 to generate the decoded image.

Further, in the case where the coding stream as a decoding target corresponds to the Radon coding mode 1 as the new coding mode in the embodiment shown in Fig. 8, the residual component decoded by the inverse quantization unit 206, inverse frequency transform unit 207, inverse Radon transform unit 208 and expand filter 209 is synthesized with the predicted image generated by the motion estimation synthesizing unit 205 to generate the decoded image.

For the image decoding method in Fig. 6, in the case where the coding stream as a decoding target corresponds to the DCT mode 1 as the related intra prediction mode shown in Fig. 8, the predicted image is synthesized by the intra prediction in the step 604, the inverse quantization and inverse DCT transform are applied to the coding data to decode the residual component in the step 608, and the predicted image is synthesized with the residual component to generate the decoded image in the step 609.

Next, in the case where the coding stream as a decoding target corresponds to the CDT mode 2 as the related motion estimation mode shown in Fig. 8, the predicted image is synthesized by the motion estimation in the step 604, the inverse quantization and inverse DCT transform are applied to the coding data to decode the residual component in the step 608, and the predicted image is synthesized with the residual component to generated the decoded image in the step 609.

In the case where the coding stream as a decoding target corresponds to the Radon coding mode 1 as the new coding mode in the embodiment shown in Fig. 8, the predicted image is synthesized by the intra prediction in the step 604, the residual component is decoded in the steps 605 to 607, and the predicted image is synthesized with the residual component to generate the decoded image in the step 609.

Next, in the case where the coding stream as a decoding target corresponds to the Radon coding mode 2 as the new coding mode in the embodiment shown in Fig. 8, the predicted image is synthesized by the intra prediction in the step 604, the residual component is decoded in the steps 605 to 607, and the predicted image is synthesized with the residual component to generate the decoded image in the step 609.

In addition, even in the embodiment, the respective coding modes may be broken into parts, and a defined coding stream may be set to a decoding target stream, by using parameters of the block size used in the coding modes, the size of compression image used in the Radon coding mode, etc., other than the example of coding modes shown in Fig. 8.

The decoding process is performed in the embodiment of the invention as described above.

According to the foregoing image decoding apparatus and image decoding method in the third embodiment, the image decoding apparatus and image decoding method can be realized to decode the coding stream which is coded by using the existing coding system and common block size, and also using the Radon transform.

Further, according to the image decoding apparatus and image decoding method in the third embodiment, the coding stream coded by the Radon transform mode is decoded so that the image decoding apparatus and image decoding method can be realized for decoding the image which is suitable for the human visual characteristic and has less image deterioration.

The image decoding apparatus and image decoding method in the third embodiment can be applicable to a reproduction device, cellular telephone, digital camera, etc.

According to the foregoing image decoding apparatus and image decoding method in the third embodiment of the invention, the coding data having a less amount of code can be decoded in high image quality.

In addition, any combinations with the drawing, methods, etc. in the embodiments can be made into aspects of the invention.

According to the foregoing embodiments of the invention, the amount of code can be reduced, and the deterioration of image quality can also be prevented, that is, the high compression ratio and good image quality can be realized.

It should be further understood by those skilled in the art that although the foregoing description has been made on embodiments of the invention, the invention is not limited thereto and various changes and modifications may be made without departing from the spirit of the invention and the scope of the appended claims, as interpreted by the description and drawings.

**Claims**

1. An image coding apparatus which encodes an input image, comprising:

   a size reduction (105) which compresses an image of every block either of an entire input image or of dividing the input image;
   a Radon transform unit (106) which applies a Radon transform to a compressed image by the size reduction to generate a coefficient;
   a frequency transform unit (107) which applies a frequency transform to the coefficient generated from the Radon transform unit; and
   a quantization unit (108) which applies a quantization to the coefficient transformed in a frequency by the frequency transform unit.

2. The apparatus according to claim 1, wherein an image size of every block either of the entire input image or of dividing the input image is a powers of 2 squared or an even number, and an image size after compressed by the size reduction (105) is a prime number.

3. The apparatus according to claim 1 further comprising:

   a transform unit (110) which applies a transform process other than the Radon transform to the image of every block of either the entire input image or of dividing the input image to generate a coefficient;
   a second quantization unit (111) which applies a quantization to the coefficient generated by the transform unit; and
   a coding mode selection unit (119) which selectively change over the coefficient quantized by the quantization unit (108) and the coefficient quantized by the second quantization unit (111) to output either the coefficient.

4. The apparatus according to claim 3, wherein the transform unit (110) performs a transform process using a DCT (Discrete Cosine Transform).

5. An image decoding apparatus which decodes a coding stream encoded with an image, comprising:

   an inverse quantization unit (113, 206) which applies an inverse quantization to a coding coefficient included in the coding stream to output a coefficient;
   an inverse frequency transform unit (114, 207) which applies an inverse frequency transform to the coefficient quantized by the inverse quantization unit;
   an inverse Radon transform unit (115, 208) which applies an inverse Radon transform to the coefficient transformed in an inverse frequency by the inverse frequency transform unit to generate a decompression image; and
   an expand filter (116, 209) which expands the decompression image generated by the inverse Radon transform unit.

6. The apparatus according to claim 5, wherein a previous image size prior to the expand by the expand filter (116, 209) is a prime number, and an image size after expanded by the expand filter is a powers of 2 squared or an even number.

**7.** The apparatus according to claim 5, wherein a coding mode of the coding stream includes a first coding mode indicating that the coding is performed by using a Radon transform, and a second coding mode indicating that the coding is performed by using a transform process other than the Radon transform, and further comprising:

a mode judgment unit (202) which judges the coding mode by receiving the coding stream;
a second inverse quantization unit (210) which applies an inverse quantization to the coding coefficient included in the coding stream having the second coding mode to output the coefficient; and
transform unit (211) which applies an inverse transform process for the transform process other than the Radon transform to the coefficient inversely quantized by the second inverse quantization unit, wherein
the coding coefficient of the coding stream is inputted to an inverse quantization unit (206) when the mode judgment unit judges that the coding mode of the coding stream is the first coding mode, and
the coding coefficient of the coding stream is inputted to the second inverse quantization unit (210) when the mode judgment unit judges that the coding mode of the coding stream is the second coding mode.

**8.** An image decoding method which decodes a coding stream encoded with an image, comprising:

a coding mode judgment step (202) which judges a coding mode of the coding stream;
an inverse quantization and frequency transform process step (113, 114, 206, 207) which applies an inverse quantization process and inverse frequency transform process to the coding stream when the coding mode is judged by the coding mode judgment step indicating that the coding mode is encoded by using a size reduction (105) and a Radon transform;
an inverse Radon transform step (115, 208) which applies an inverse Radon transform process to a coefficient processed by the inverse quantization and frequency transform process step to generate a decompression image; and
an expand transform step (116, 209) which transforms the decompression image in an expand, generated by the inverse Radon transform process step.

**9.** The method according to claim 8, wherein a size of the decompression image generated by the inverse Radon transform process step (208) is a prime number, and an image generated in the expand transform by the expand transform step (209) is a powers of 2 squared or an even number.

**10.** The method according to claim 8, further comprising a reconstructed image generation step (212), wherein the decompression image transformed in the expand by the expand transform step (209) is synthesized with a predicted image corresponding to the coding mode judged by the coding mode judgment step (202) to generate a reconstructed image.

**11.** The method according to claim 10, wherein the reconstructed image generation step (212) generates the reconstructed image such that the predicted image generated by an intra prediction is synthesized with the decompression image transformed in the expand by the expand transform step (209), when the coding mode judged by the coding mode judgment step (202) is a mode using the intra prediction.

**12.** The method according to claim 10, wherein the reconstructed image generation step (212) synthesizes the predicted image generated by a motion estimation with the depression image transformed in the expand by the expand transform step (209) to generate a reconstructed image, when the coding mode judged by the coding mode judgment step (202) is a mode using the motion estimation.

**FIG.1**

FIG.1 — Block diagram showing:

101 BLOCK DIVIDING UNIT → 102 PREDICTION RESIDUE CALCULATION UNIT

105 COMPRESSION FILTER → 106 RADON TRANSFORM UNIT → 107 FREQUENCY TRANSFORM UNIT → 108 QUANTIZATION UNIT → 109 ENTROPY CODING UNIT

110 DCT TRANSFORM UNIT → 111 QUANTIZATION UNIT → 112 ENTROPY CODING UNIT

103 INTRA PREDICTION UNIT, 104 MOTION ESTIMATION UNIT

117 INVERSE QUANTIZATION UNIT, 113 INVERSE QUANTIZATION UNIT

114 INVERSE FREQUENCY TRANSFORM UNIT

115 INVERSE RADON TRANSFORM UNIT

118 INVERSE DCT TRANSFORM UNIT, 116 EXPAND FILTER

119 MODE SELECTION UNIT

120 RECONSTRUCTED IMAGE MEMORY

121 DATA OUTPUT UNIT

EP 2 001 238 A2

# FIG.2

STREAM ANALYSIS UNIT ~201

202~ MODE JUDGMENT UNIT

COEFFICIENT ANALYSIS UNIT

203

204 INTRA PREDICTION SYNTHESIZING UNIT

210~ INVERSE QUANTIZATION UNIT

INVERSE QUANTIZATION UNIT ~206

INVERSE FREQUENCY TRANSFORM UNIT ~207

INVERSE RADON TRANSFORM UNIT ~208

211~ INVERSE DCT TRANSFORM UNIT

EXPAND FILTER ~209

205 MOTION ESTIMATION SYNTHESIZING UNIT

212~ RECONSTRUCTED IMAGE MEMORY

213~ IMAGE OUTPUT UNIT

EP 2 001 238 A2

FIG.3A

16 PIXELS

16 PIXELS

MACRO BLOCK

FIG.3B

BLOCK

FIG.3C

$$a_{ij} = \begin{cases} \dfrac{2n-2j-3}{2(n-1)} & i=j, j<n-1 \\[2mm] \dfrac{2j+1}{2(n-1)} & i=j+1, j<n-1 \\[2mm] \dfrac{1}{n} & j=n-1, i=2k \\[2mm] -\dfrac{1}{n} & j=n-1, i=2k+1 \\[2mm] 0 & others \end{cases}$$

FIG.3D

$$\begin{bmatrix} 13/14 & 1/14 & 0 & 0 & 0 & 0 & 0 & 0 \\ 0 & 11/14 & 3/14 & 0 & 0 & 0 & 0 & 0 \\ 0 & 0 & 9/14 & 5/14 & 0 & 0 & 0 & 0 \\ 0 & 0 & 0 & 7/14 & 7/14 & 0 & 0 & 0 \\ 0 & 0 & 0 & 0 & 5/14 & 9/14 & 0 & 0 \\ 0 & 0 & 0 & 0 & 0 & 3/14 & 11/14 & 0 \\ 0 & 0 & 0 & 0 & 0 & 0 & 1/14 & 13/14 \\ 1/8 & -1/8 & 1/8 & -1/8 & 1/8 & -1/8 & 1/8 & -1/8 \end{bmatrix}$$

FIG.3E

$$\begin{bmatrix} 5/6 & 1/6 & 0 & 0 \\ 0 & 1/2 & 1/2 & 0 \\ 0 & 0 & 1/6 & 5/6 \\ 1/4 & -1/4 & 1/4 & -1/4 \end{bmatrix}$$

# FIG.4A

**FIG.4B**

$$FRAT_f(k,l) = \frac{1}{\sqrt{p}} \left( \sum_{(i,j)\in L_{k,l}} f[i,j] \right)$$

$$L_{k,l} = \begin{cases} \{(i,j): j = (ki+l)(\bmod p), i \in Z_p\} & 0 \le k < p \\ \{(l,j): j \in Z_p\} & k = p \end{cases}$$

**FIG.4C**

$$FBP_r(i,j) = \frac{1}{\sqrt{p}} \left( \sum_{(k,l)\in P_{i,j}} r_k[l] \right)$$

$$P_{i,j} = \{(k,l): l = (j - ki)(\bmod p), k \in Z_p\} \Upsilon \{(p,i)\}$$

# FIG.5

DIVIDE ORIGINAL IMAGE INTO BLOCKS — 501

SYNTHESIS IS PERFORMED FOR PREDICTED IMAGE IN EACH CODING MODE, AND RESIDUE IMAGE IS GENERATED FOR PREDICTED IMAGE AND ORIGINAL IMAGE — 502

COMPRESSION TRANSFORM IS PERFORMED FOR BLOCK IN RADON CODING MODE — 503

DCT TRANSFORM, QUANTIZATION, ENTROPY CODING, CODING DATA GENERATION AND RECONSTRUCTED IMAGE GENERATION, ARE PERFORMED IN CODING MODES — 506

RADON TRANSFORM IS PERFORMED IN RADON CODING MODE — 504

FREQUENCY TRANSFORM, QUANTIZATION, ENTROPY CODING, CODING DATA GENERATION, CODING DATA GENERATION AND RECONSTRUCTED IMAGE GENERATION, ARE PERFORMED IN RADON CODING MODE — 505

DETERMINE CODING MODE — 507

OUTPUT CODING MODE FLAG AND CODING DATA (OUTPUT OF CODING STREAM) — 508

## FIG.6

```
            │
┌───────────────────────────┐
│   OBTAIN CODING STREAM     │─── 601
└───────────────────────────┘
            │
┌───────────────────────────┐
│    ANALYZE CODING MODE     │─── 602
│   FLAG AND CODING DATA     │
└───────────────────────────┘
            │
┌───────────────────────────┐
│     JUDGE CODING MODE      │─── 603
└───────────────────────────┘
            │
┌───────────────────────────┐
│   SYNTHESIS IS PERFORMED   │
│    FOR PREDICTED IMAGE     │─── 604
│  CORRESPONDING TO CODING   │
│ MODE RESULTED BY JUDGMENT  │
└───────────────────────────┘
```

INVERSE QUANTIZATION AND INVERSE FREQUENCY TRANSFORM ARE PERFORMED FOR CODING DATA ~ 605

INVERSE QUANTIZATION AND INVERSE DCT TRANSFORM ARE PERFORMED FOR CODING DATA ~ 608

PERFORM INVERSE RADON TRANSFORM ~ 606

PERFORM EXPAND TRANSFORM OF BLOCK ~ 607

PREDICTED IMAGE IS SYNTHESIZED WITH RESIDUAL COMPONENT TO GENERATE RECONSTRUCTED IMAGE ~ 609

OUTPUT GENERATED RECONSTRUCTED IMAGE ~ 610

# FIG.7

701 DATA RECORDING MEDIUM

702 DATA STRING

703 704 705 706 707

708

709

# FIG.8

| CODING MODE | TRANSFORM PROCESS | PREDICTION PROCESS |
|---|---|---|
| DCT MODE 1 | DCT | INTRA PREDICTION |
| DCT MODE 2 | DCT | MOTION ESTIMATION |
| RADON CODING MODE 1 | RADON TRANSFORM | INTRA PREDICTION |
| RADON CODING MODE 2 | RADON TRANSFORM | MOTION ESTIMATION |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Joint Video Team (JVT) of ISO/IEC MPEG & ITU-T VCEG: Text of International Standard of Joint Video Specification. *ITU-T Rec. H.264 I ISO/IEC 14496-10 Advanced Video Coding,* December 2003
- **MINH N. DO ; MARTIN VETTERLI.** The Finite Ridgelet Transform for Image Representation. *IEEE Transactions on Image Processing,* January 2003, vol. 12 (1

- Text of International Standard of Joint Video Specification. *ITU-T Rec. H.264 | I ISO/IEC 14496-10 Advanced Video Coding,* December 2003
- **GARY SULLIVAN ; THOMAS WIEGAND.** Rate-Distortion Optimization for Video Compression. *IEEE Signal Processing Magazine,* November 1998, vol. 15 (6), 74-90